(19) Europäisches Patentamt
European Patent Office
Office européen des brevets

(11) Publication number: **0 275 324 B1**

(12) # EUROPEAN PATENT SPECIFICATION

(45) Date of publication of patent specification: **27.12.95**

(51) Int. Cl.6: **C08G 63/60**, C08G 63/68

(21) Application number: **87904936.9**

(22) Date of filing: **23.07.87**

(86) International application number:
**PCT/JP87/00536**

(87) International publication number:
**WO 88/00955 (11.02.88 88/04)**

(54) **AROMATIC POLYESTERS WITH GOOD HEAT RESISTANCE**

(30) Priority: **28.07.86 JP 175742/86**
**06.08.86 JP 183374/86**

(43) Date of publication of application:
**27.07.88 Bulletin 88/30**

(45) Publication of the grant of the patent:
**27.12.95 Bulletin 95/52**

(84) Designated Contracting States:
**DE FR GB**

(56) References cited:
**EP-A- 0 095 938**
**JP-A-56 141 317**
**JP-A-60 245 632**
**JP-A- 6 038 425**
**JP-A-60 199 028**
**US-A- 4 563 508**

(73) Proprietor: **TORAY INDUSTRIES, INC.**
**2-1, Nihonbashi-Muromachi 2-chome**
**Chuo-ku**
**Tokyo 103 (JP)**

(72) Inventor: **OKAMOTO, Masaru**
**5-396, Koyanowaki**
**Kagiya-cho**
**Tokai-shi**
**Aichi 477 (JP)**
Inventor: **INOUE, Toshihide**
**23-40, Miyazaki-Nishi**
**Tozuka-Aza**
**Yamato-cho**
**Ichinomiya-shi**
**Aichi 491 (JP)**
Inventor: **KATAOKA, Shiro**
**Atsuta-ryo**
**4-1, Sanjo 2-chome**
**Minami-ku**
**Nagoya-shi**
**Aichi 457 (JP)**

(74) Representative: **Coleiro, Raymond et al**
**MEWBURN ELLIS**
**York House**
**23 Kingsway**
**London WC2B 6HP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 275 324 B1

## Description

The present invention relates to aromatic polyesters able to give a molding having excellent flow characteristics, heat resistance and mechanical properties.

The need for high performance plastics has recently become more marked and a lot of polymers having various new characteristics have been developed and are available in the market. Among them, optically anisotropic liquid crystalline polymers characterized by parallel arrangement of their molecular chains have come to attention, due to the fact that they have excellent mechanical properties.

As one of these liquid crystalline polymers, thermotropic polyesters are well known and, for example, p-hydroxybenzoic acid homopolymer and its copolymer copolymerized with 4,4'-dihydroxybiphenyl and phthalic acid are well known. However, these homo- and co-polymers of p-hydroxybenzoic acid have inferior melt-fluidity as their melting points are too high. Therefore, polyesters whose melting points are lowered by copolymerizing various components with p-hydroxybenzoic acid have been the subject of patent applications. For example, there have been disclosed a polyester prepared by copolymerizing phenylhydroquinone, terephthalic acid and/or 2,6-naphthalenedicarboxylic acid with p-hydroxybenzoic acid (Japanese Patent Publication No. 500,215/1980), a polyester prepared by copolymerizing 2,6-dihydroxynaphthalene and terephthalic acid with p-hydroxybenzoic acid (Japanese Patent Laid-Open No. 50594/1979), a polyester prepared by copolymerizing 2,7-dihydroxynaphthalene, isophthalic acid and/or terephthalic acid with p-hydroxybenzoic acid (Japanese Patent Laid-Open No. 38426/1985, No. 104,123/1985), a polyester prepared by copolymerising hydroquinone, isophthalic acid and moreover a small amount of 4,4'-dihydroxybiphenyl and terephthalic acid with p-hydroxybenzoic acid (Japanese Patent Laid-Open No. 38425/1985, No. 235,833/1985), a polyester consisting of p-hydroxybenzoic acid, 4,4'-dihydroxybiphenyl or hydroquinone, terephthalic acid and isophthalic acid (Japanese Patent Publication No. 47870/1972), a polyester prepared by copolymerizing phenylhydroquinone, 4,4'-dihydroxybiphenyl and terephthalic acid with p-hydroxybenzoic acid of less than 57 mole % of the whole (Japanese Patent Laid-Open 199,028/1985) and a polyester prepared by copolymerizing p-oxybenzoic acid, an aromatic dihydroxy compound and terephthalic acid with polyethylene terephthalate (Japanese Patent Laid-Open No. 8395/1976).

Therefore, the present inventors have carried out polymerisation, molding and evaluation of various new polyesters with a view to obtaining polyesters capable of giving moldings having good flow characteristics, heat resistance and mechanical properties and have found that aromatic polyesters consisting of specified amounts of p-hydroxybenzoic acid, 4,4'-dihydroxybiphenyl, hydroquinone and terephthalic acid or terephthalic acid and isophthalic acid (with or without copolymerisation of dihydroxy compounds such as t-butylhydroquinone and so on) could satisfy the above described purpose.

In accordance with the present invention we provide an aromatic polyester having good heat resistance and comprising the below described structural units (i), (v), (vi) and (vii) with or without the structural unit (viii), where the molar ratio of the structural unit (i) to the total of the structural units [(i) + (vi) + (vii) + (viii)] is from 60 to 90%, the molar ratio of the structural units [(vi) + (vii) + (viii)] to the total of the structural units [(i) + (vi) + (vii) + (viii)] is from 10 to 40%, the molar ratio of the structural unit (vi) to the total of the structural units [(vi) + (vii)] is 50 to 95%, the molar ratio of the structural unit (vii) to the total of the structural units [(vii) + (viii)] is 5 to 100% and the molar ratio of the total of the structural units [(vi) + (vii) + (viii)] to the structural unit (v) is 1; and whose logarithmic viscosity in 0.1 g/dl pentafluorophenol solution at 60 °C is 1.0 to 20 dl/g

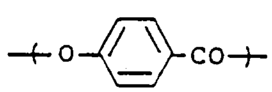

..... (i)

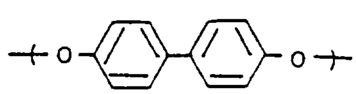

..... (vi)

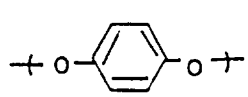

..... (vii)

{OXO} (viii)

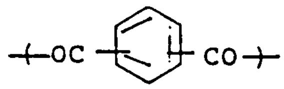 ..... (v)

The invention also provides a process for producing the above aromatic polyester having a logarithmic viscosity in 0.1g/dl pentafluorophenol solution at 60 °C of 1.0 to 20dl/g and comprising the following repeating units

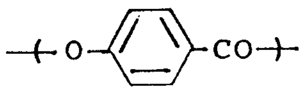 ..... (i)

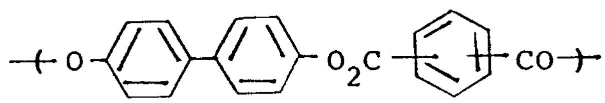 ..... (ii)

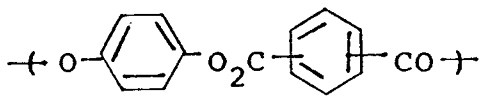 ..... (iii)

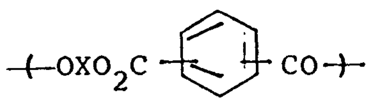 ..... (iv)

(wherein X is selected from the following groups

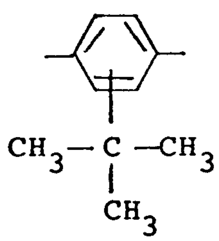 , 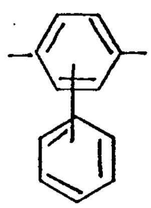 , 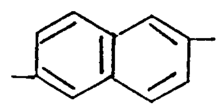 , 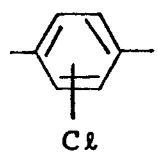 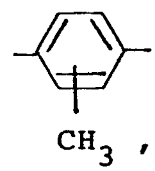 ,

and the carbonyl groups in the structural units (II) to (IV) are in meta or para position to each other, more than 65 mole % thereof being in para position).

When the polyester is comprised of only the structural units (i) to (iii) in the present invention, it is preferable that 65 to 85 mole % of the carbonyl groups in (ii) and (iii) are in para position.

It is generally expected that the heat resistance is ordinarily largely lowered by copolymerizing a dihydroxy compound having a bulky substituted group such as t-butylhydroquinone with a polyester consisting of the rigid structures (i) to (iii), but the present inventors found that the decrease in heat resistance was very little and both the flow characteristics and the mechanical properties could be largely improved.

Preferred embodiments of the present invention will be explained below in detail.

In aromatic polyesters of the present invention, the above described structural unit (i) represents the structural unit of polyester prepared from p-hydroxybenzoic acid.

The above described structural unit (ii) represents the structural unit of polyester prepared from 4,4'-dihydroxybiphenyl and terephthalic acid or terephthalic acid and isophthalic acid.

The above described structural unit (iii) represents the structural unit of polyester prepared from hydroquinone and terephthalic acid or terephthalic acid and isophthalic acid.

The above described structural unit (iv) represents the structural unit of polyester prepared from one of the dioxy compounds selected from t-butylhydroquinone, phenylhydroquinone, 2,6-dihydroxynaphthalene, chlorohydroquinone and methylhydroquinone and terephthalic acid or terephthalic acid and isophthalic acid.

The molar ratio of the structural unit (i) to the total of the structural units [(ii) + (iii) + (iv)] is 60 to 90 mole %, preferably 65 to 80 mole %. If the said ratio is more than 90 mole % or less than 60 mole %, this is not desirable as the flow characteristics and heat resistance become poor.

The molar ratio of the structural unit (ii) to the total of the structural units [(ii) + (iii)] is 50 to 95 mole %. If the said ratio is less than 50 mole %, the heat resistance is poor and, if more than 95 mole %, the flow characteristics become poor. These are therefore not desirable.

The molar ratio of the structural unit (iii) to the total of the structural units [(iii) + (iv)] is 5 to 100 mole %. If the said ratio is less than 5 mole %, this is not desirable as either the flow characteristics, the heat resistance or the mechanical properties are poor.

Moreover, in aromatic polyesters of the present invention, the carbonyl groups in the structural units (ii) and (iii) have a relation of para or meta position to each other and more than 65 mole % thereof are in para position. If the value is less than 65 mole %, it is not desirable as the heat resistance is not sufficient.

Moreover, if the polyester is comprised of only the structural units (i) to (iii), 65 to 85, preferably 65 to 80, mole % of the carbonyl groups of the structural units (II) and (III) may be in para position to each other, and more preferably 72 to 77.5 mole %. If more than 80 mole% are in para position, this is not desirable as the flow characteristics become poor.

On the other hand, when the polyester is comprised of the structural units (i) to (iv), it is preferable that the molar ratio of the structural unit (iv) to the total of the structural units [(iii) + (iv)] is 10 to 80 mole %, and t-butylhydroquinone, phenylhydroquinone and 2,6-dihydroxnaphthalene are preferable among dihydroxy compounds constituting the structural unit (iv).

Aromatic polyesters of the present invention can be prepared by applying the conventional polycondensation methods for polyesters and no special limitation exists in the method of preparation. For Example, the following methods (1) to (4) can be listed as the representative methods.

(1) The method for preparing an aromatic polyester by a deacylation and polycondensation reaction using an acylated compound of a hydroxycarboxylic acid (such as p-acetoxybenzoic acid), respective acylated compounds of dihydroxy biphenyl (such as 4,4'-diacetoxybiphenyl) and hydroquinone (such as hydroquinone diacetate); and at least terephthalic acid and optionally isophthalic acid.

(2) The method for preparing an aromatic polyester by a deacylation and polycondensation reaction using p-hydroxybenzoic acid and respective aromatic dihyroxy compounds, namely at least 4,4'-dihyroxybiphenyl and hydroquinone, and terephthalic acid, optionally isophthalic acid, and acetic anhydride.

(3) The method for preparing aromatic polyesters by a dephenolation and polycondensation reaction using the phenyl ester of p-hydroxybenzoic acid, aromatic dihydroxy compounds, namely at least 4,4'-dihydroxybiphenyl and hydroquinone and the diphenyl ester of at least terephthalic acid and optionally isophthalic acid.

(4) The method for preparing an aromatic polyester by a dephenolation and polycondensation reaction carried out by reacting p-hydroxybenzoic acid, terephthalic acid and optionally isophthalic acid with a required amount of diphenyl carbonate to prepare their phenyl esters and thereafter adding aromatic dihydroxy compounds, namely at least 4,4'-dihydroxybiphenyl and hydroquinone.

When units derived from 2,6-dihydroxynaphthalene are additionally to be included, it is desirable that method (1) or (2) is adopted in which 2,6-diacetoxynaphthalene is used.

These polycondensation reactions proceed without any catalyst, but in some cases, it is preferable to add a metallic compound such as potassium acetate, sodium acetate, antimony trioxide, metallic magnesium, stannous acetate and tetrabutyl titanate.

As the melt viscosity of aromatic polyesters of the present invention, 50 to 15,000 poises are preferable and 100 to 10,000 poises are more preferable.

The values of this melt viscosity are measured by means of Kota type flaw tester at the temperature of liquid crystal starting temperature plus 30 to 50 °C under a shear rate of 1,000 to 3,000 $sec^{-1}$.

The logarithmic viscosity of these aromatic polyesters dissolved at a concentration of 0.1 weight % in pentafluorophenol at 60 °C is 1.0 to 20.0 dℓ/g, and 2.0 to 10.0 dℓ/g is especially preferable.

Aromatic polyesters of the present invention thus prepared have melting points lower than 400 °C and conventional melt moldings such as extrusion molding, injection molding, compression molding, blow molding and so on can be therefore applied to prepare fibers, films, three dimensional moldings, containers and hoses and so on.

Moreover, when molding is carried out, required characteristics can be given to aromatic polyesters of the present invention by adding reinforcing materials such as glass fibers, carbon fibers, asbestos, additives such as fillers, nucleation agents, pigments, anti-oxidative agents, stabilizers, plasticizers, lubricants, releasing agents and flame retardants and other thermoplastic resins.

Moreover, the strength of the moldings obtained can be improved by heat-treatment and their modulus can be improved as well in most cases.

This heat-treatment can be carried out by heat-treating the moldings in either an inert atmosphere (for example, nitrogen, argon, helium or steam), an oxygen-containing atmosphere (for example, air) or under reduced pressure at a temperature below the melting point of the polymer. This heat-treatment can be done either in the stretched state or in the unstretched state for scores of minutes to several days.

The moldings prepared from new aromatic polyesters of the present invention have good optical anisotropy and flow characteristics due to the parallel molecular arrangement and excellent mechanical properties and heat resistance as well.

Example 1

54.05 g (30 x $10^{-2}$ mole) of p-acetoxybenzoic acid (i), 18.38 g (6.8 x $10^{-2}$ mole) of 4,4'-diacetoxybiphenyl (vi), 6.21 g (3.2 x $10^{-2}$ mole) of hydroquinone diacetate (vii), 12.43 g (7.5 x $10^{-2}$ mole) of terephthalic acid ($v_1$) and 4.19 g (2.5 x $10^{-2}$ mole) of isophthalic acid ($v_2$) were introduced into a polymerization test tube in such proportions that the molar ratio of (i)/[(i) + (vi) + (vii)], that of (vi)/[(vi) + (vii)] and that of ($v_1$)/[($v_1$) + ($v_2$)] were 75, 68 and 75 mole % respectively and deacetylation polymerization was carried out under the following conditions. At first, the reaction was carried out under nitrogen atmosphere at 250 to 360 °C for 3 hours and the pressure was thereafter reduced to 1 mmHg. Polycondensation reaction was completed by heating for more than one hour to give approximately the theoretical amount of acetic acid distillate and to obtain a brown polymer. Five batches of the polymerization were carried out under the same conditions and the polymers recovered were ground, using a grinding machine manufactured by Horai Co., Ltd.

The theoretical formula of this polymer was as follows.

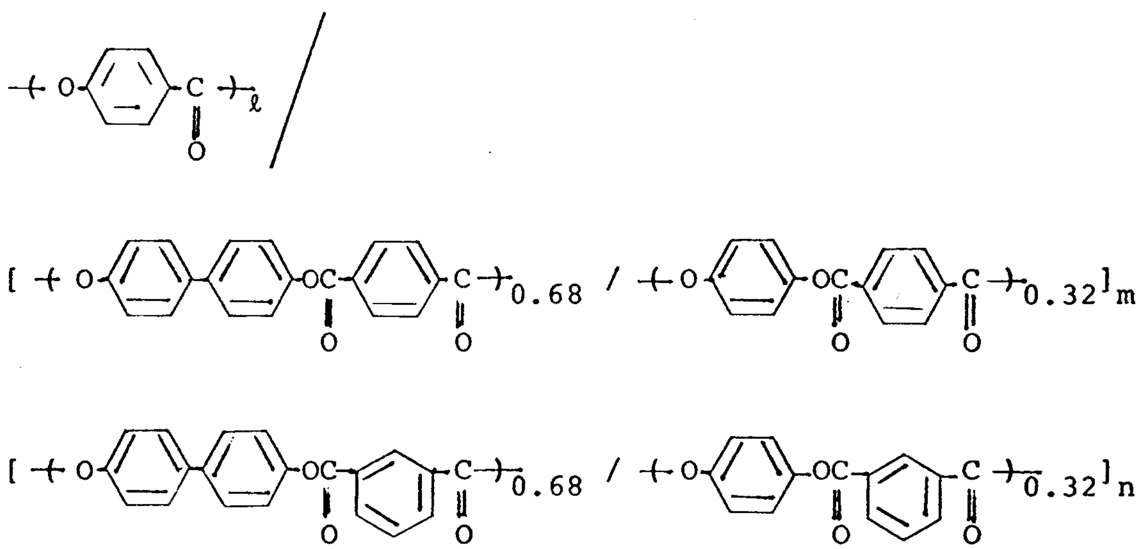

$\ell$ / m / n = 75 / 18.75 / 6.25

The result of the elemental analysis of this polyester is shown in Table 1, which shows good coincidence with the theoretical values.

Table 1

| | Measured values (weight %) | Theoretical values (weight %) |
|---|---|---|
| C | 71.4 | 71.6 |
| H | 3.4 | 3.5 |
| O | 25.2 | 24.9 |

Notice: The oxygen content (%) was calculated by the equation O% = (100% - C% - H%).

This polyester was placed on the sample plate of a polarization microscope and the optical anisotropy was observed by elevating temperature. Good optical anisotropy was thereby observed above 305 °C. The melt viscosity of this polymer was 6,500 poises at 350 °C under the rate of shear of 1,000 $sec^{-1}$, thus showing very good flow characteristics.

Test pieces of 1/8" in thickness x 1/2" in width x 5" in length and test pieces for the mold-notch impact strength determination of 1/8" in thickness x 2•1/2" in length of this polymer were prepared by using Sumitomo-Nestal injection molding machine Promat 40/25 (manufactured by Sumitomo Heavy Machine Industries Co., Ltd.) under such conditions that the cylinder temperature and the mold temperature were 350 ° and 30 °C respectively. The flexural modulus of this test piece measured by using Tensilon UTM-100 manufactured by Toyo Boldwin Co. Ltd. under such conditions that the rate of strain was 1 mm/minute and the distance between spans was 50 mm, was 13.3 GPa. The value of Izod impact strength (mold-notch) was 34 kg•cm/cm, which is high. Heat distortion temperature of the test piece of 1/8" in thickness measured by using the heat distortion measuring apparatus manufactured by Toyo Seiki Co., Ltd. was 264 °C (18.56 $kg/cm^2$), thus showing excellent heat resistance.

When these test pieces were heat-treated in a hot air oven at 190 ° to 270 °C for 22 hours, the flexural modulus of 1/8" in thickness increased to 14.5 GPa and the heat distortion temperature also greatly increased to higher than 290 °C (18.56 $kg/cm^2$).

Examples 2 to 6, Comparison examples 1 to 7

p-Acetoxybenzoic acid (i), 4,4'-diacetoxybiphenyl (vi), hydroquinone diacetate (vii), terephthalic acid ($v_1$) and isophthalic acid ($v_2$) were introduced into polymerization test tubes and the polycondensation reactions were carried out under the same reaction conditions as those of example 1 to obtain polymers. Homogeneous melt polymerization was possible in examples 2 to 6, but in the case of comparison examples 1 and 7, the polymers adhered to the stirrer and were partly solidified during polymerization, thus making homogeneous melt polymerization impossible.

Molding of these polymers was carried out under the same conditions as those of example 1 and the measurements of mechanical and thermal properties were done. These results are also shown in Table 2. The compositions of the present invention showed good flow characteristics, high toughness, high heat resistance and high elastic modulus.

Table 2

| | | Composition of raw materials ($x10^{-2}$ mole) (i) | (vi) | (vii) | ($v_1$) | ($v_2$) | (i)/[(i)+(vi)+(vii)] (mole %) | (vi)/[(vi)+(vii)] (mole %) | ($v_1$)/[($v_1$)+($v_2$)] (mole %) | Liquid crystal initiation temperature (°C) | Melt viscosity 1) (poise) | Logarithmic viscosity (dl/g) | Flexural modulus (GPa) | Izod impact strength (kg·cm/cm) | Heat distortion temperature (°C) |
|---|---|---|---|---|---|---|---|---|---|---|---|---|---|---|---|
| Example | 2 | 30 | 6.0 | 4.0 | 7.5 | 2.5 | 75 | 60 | 75 | 311 | 5,300 | 3.0 | 13.5 | 29 | 264 |
| | 3 | 30 | 8.0 | 2.0 | 7.5 | 2.5 | 75 | 80 | 75 | 311 | 8,600 | 3.4 | 11.9 | 36 | 258 |
| | 4 | 28.8 | 6.0 | 5.2 | 7.5 | 2.5 | 72 | 54 | 75 | 306 | 4,800 | 2.9 | 13.7 | 25 | 249 |
| | 5 | 28.8 | 7.2 | 4.0 | 7.5 | 2.5 | 72 | 64 | 75 | 305 | 6,400 | 3.2 | 13.1 | 28 | 254 |
| | 6 | 28.8 | 8.0 | 3.2 | 7.5 | 2.5 | 72 | 71 | 75 | 306 | 5,100 | 3.0 | 12.0 | 30 | 255 |
| Comparison example | 1 | 30 | 3.2 | 6.8 | 7.5 | 2.5 | 75 | 32 | 75 | Solidification occurred during polymerization | | | | | |
| | 2 | 30 | 4.0 | 6.0 | 7.5 | 2.5 | 75 | 40 | 75 | | | | | | |
| | 3 | 30 | 4.0 | 6.0 | 10.0 | - | 75 | 40 | 100 | | | | | | |
| | 4 | 26.8 | 13.2 | - | 9.9 | 3.3 | 67 | 100 | 75 | | | | | | |
| | 5 | 26.8 | 13.2 | - | 13.2 | - | 67 | 100 | 100 | | | | | | |
| | 6 | 24.0 | - | 16.0 | - | 16.0 | 60 | 0 | 0 | | | | | | |
| | 7 | 24.0 | - | 16.0 | 16.0 | - | 60 | 0 | 100 | | | | | | |

1) Measured at 350°C under the shear rate of 1,000 $sec^{-1}$.

Example 7

51.89 g (28.8 x $10^{-2}$ mole) of p-acetoxybenzoic acid (i), 18.38 g (6.8 x $10^{-2}$ mole) of 4,4'-diacetoxybiphenyl (vi), 1.94 g (1.0 x $10^{-2}$ mole) of hydroquinone diacetate (vii), 8.51 g (3.4 x $10^{-2}$ mole) of t-butylhydroquinone diacetate ($viii_1$), and 18.61 g (11.2 x $10^{-2}$ mole) of terephthalic acid ($v_1$) were

introduced into a polymerization test tube in such proportions that the molar ratio of (i)/[(i) + (vi) + (vii) + ($viii_1$)] was 72 mole %, that of (vi)/[(vi) + (vii)] was 87 mole % and that of (vii)/[(vii) + ($viii_1$)] was 23 mole %, and deacetylation polymerization was carried out under following conditions.

At first, the reaction was carried out under nitrogen atmosphere at 250 to 340 °C for 3 hours and the pressure was thereafter reduced to 1 mmHg after the temperature was elevated at 350 °C. Polycondensation reaction was furthermore carried out by heating for more one hour to obtain a brown polymer. Five batches of the polymerization were furthermore carried out under the same conditions and the polymers recovered were ground using a grinding machine manufactured by Horai Co., Ltd.

The theoretical structural formula of this polymer was as follows.

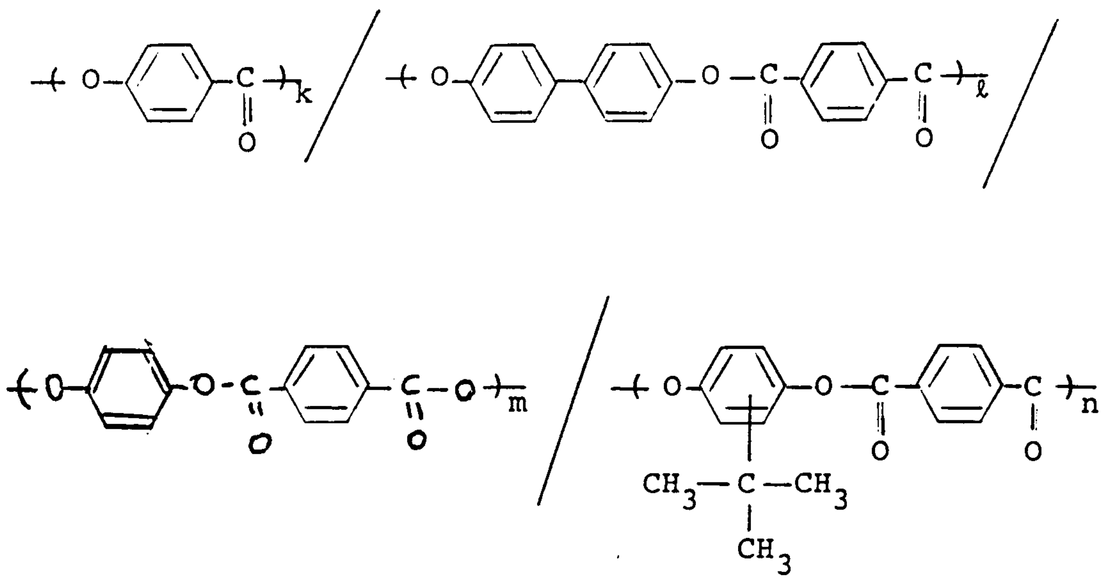

$$k / \ell / m / n = 72 / 17 / 2.5 / 8.5$$

The result of the elemental analysis of this polyester is shown in Table 3, which shows good coincidance with the theoretical values.

Table 3

| | Measured values (weight %) | Theoretical values (weight %) |
|---|---|---|
| C | 73.1 | 72.3 |
| H | 3.5 | 3.8 |
| O | 23.4 | 23.9 |

Notice: The oxygen content (%) was calculated by the equation O(%) = (100% - C% - H%).

This polyester was placed on the sample plate of a polarization microscope and the optical anisotropy was observed by elevating temperature. Good optical anisotropy was thereby observed above 307 °C.

Test pieces of this polyester were prepared by using the molding machine of example 1 under such conditions that the cylinder temperature and the mold temperature were 350 and 30 °C respectively. The flexural modulus of this test piece measured by the same conditions as those of example 1 was 16.2 GPa. The value of Izod impact strength (mold-notch) was 27 kg•cm/cm, which is high. Heat distortion temperature measured was 252 °C (18.56 kg/$cm^2$), showing excellent heat resistance.

The melt viscosity of this polymer was 2,800 poises at 350 °C under the shear rate of 1,000 $sec^{-1}$, showing very good flow characteristics. The logarithmic viscosity of this polymer was 4.0 dℓ/g.

Example 8

51.89 g (28.8 x $10^{-2}$ mole) of p-acetoxybenzoic acid (i), 21.62 g (8.00 x $10^{-2}$ mole) of 4,4'-diacetoxybiphenyl (vi), 3.11 g (1.60 x $10^{-2}$ mole) of hydroquinone diacetate (vii), 4.00 g (1.60 x $10^{-2}$ mole) of t-butylhydroquinone diacetate ($viii_1$) and 13.95 g (8.40 x $10^{-2}$ mole) of terephthalic acid ($v_1$), and 4.65 g (2.80 x $10^{-2}$ mole) of isophthalic acid ($v_2$) were introduced into a polymerization test tube in such proportions that the molar ratio of (i)/[(i) + (vi) + (vii) + ($viii_1$)] was 72 mole %, that of (vi)/[(vi) + (vii)] was 83 mole %, that of (vii)/[(vii) + ($viii_1$)] was 50 mole % and that of ($v_1$)/[($v_1$) + ($v_2$)] was75 mole % respectively, and deacetylation polymerization was carried out under the following conditions.

At first, the reaction was carried out under nitrogen atmosphere at 250 to 340 °C for 3 hours and the pressure was thereafter reduced to 1.5 mmHg after the temperature was elevated to 360 °C. Polycondensation reaction was furthermore carried out by heating for more one hour to obtain a brown polymer. Five batches of the polymerization were furthermore carried out under the same conditions and the polymers recovered were ground, using a grinding machine manufactured by Horai Co., Ltd.

The theoretical formula of this polymer was as follows.

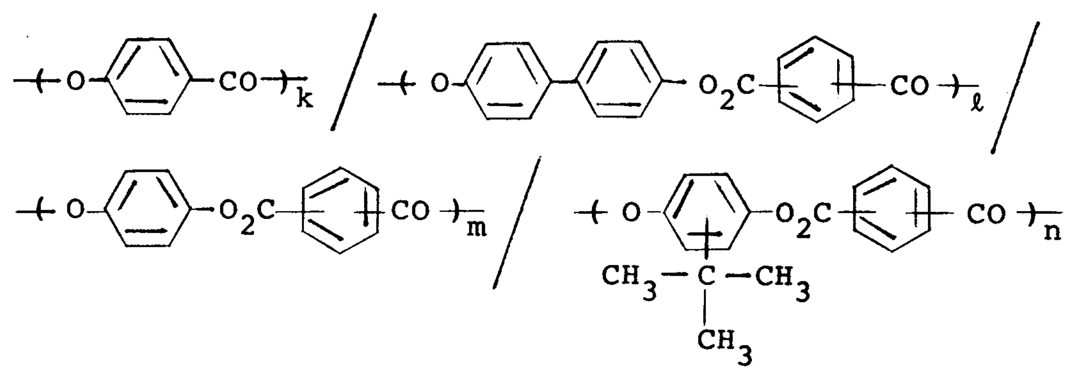

k / ℓ / m / n = 72 / 20 / 4 / 4

The result of the elemental analysis of this polyester is shown in Table 4, which shows good coincidance with the theoretical values.

Table 4

| | Measured values (weight %) | Theoretical values (weight %) |
|---|---|---|
| C | 70.9 | 70.6 |
| H | 3.3 | 3.4 |
| O | 25.8 | 26.0 |

Notice: The oxygen content (%) was calculated by the equation O(%) = 100(%) - C(%) - H(%).

This polyester was placed on the sample plate of a polarization microscope and the optical anisotropy was observed by elevating the temperature and by adding a shear stress. Good optical anisotropy was thereby observed above 313 ° C.

Test pieces of this polyester were prepared by using the molding machine of example 1 under such conditions that the cylinder temperature and the mold temperature were 350 ° and 120 ° C respectively. The bending modulus of this test piece measured by the same conditions as those of example 1 was 16.8 GPa. The value of Izod impact strength (cut-notch) was 20 kg•cm/cm, which is high. Heat distortion temperature measured was 265 ° C (18.56 kg/$cm^2$), which shows excellent heat resistance.

The melt viscosity of this polymer was 7,100 poises at 353 ° C under the shear rate of 1,000 $sec^{-1}$, which shows very good flow characteristics. The logarithmic viscosity of this polymer was 4.2 dℓ/g.

Example 9

51.89 g (28.8 x $10^{-2}$ mole) of p-acetoxybenzoic acid (i), 18.38 g (6.8 x $10^{-2}$ mole) of 4,4'-diacetoxybiphenyl (vi), 1.94 g (1.0 x $10^{-2}$ mole) of hydroquinone diacetate (vii), 9.21 g (3.4 x $10^{-2}$ mole) of phenylhydroquinone diacetate ($viii_2$) and 18.61 g (11.2 x $10^{-2}$ mole) of terephthalic acid ($v_1$) were introduced into a polymerization test tube in such proportions that the molar ratio of (i)/[(i) + (vi) + (vii) + ($viii_2$)] was 72 mole %, that of (vi)/[(vi) + (vii)] was 87 mole %, that of (vii)/[(vii) + ($viii_2$)] was 23 mole %, and deacetylation polymerization was carried out under the following conditions.

At first, the reaction was carried out under nitrogen atmosphere at 250 ° to 350 ° C for 3 hours and the pressure was thereafter reduced to 0.5 mmHg. Polycondensation reaction was furthermore carried out by heating for 0.3 hour more to obtain a brown polymer. Five batches of the polymerization were furthermore carried out under the same conditions and the polymers recovered were ground using a grinding machine manufactured by Horai Co., Ltd.

The theoretical formula of this polymer was as follows.

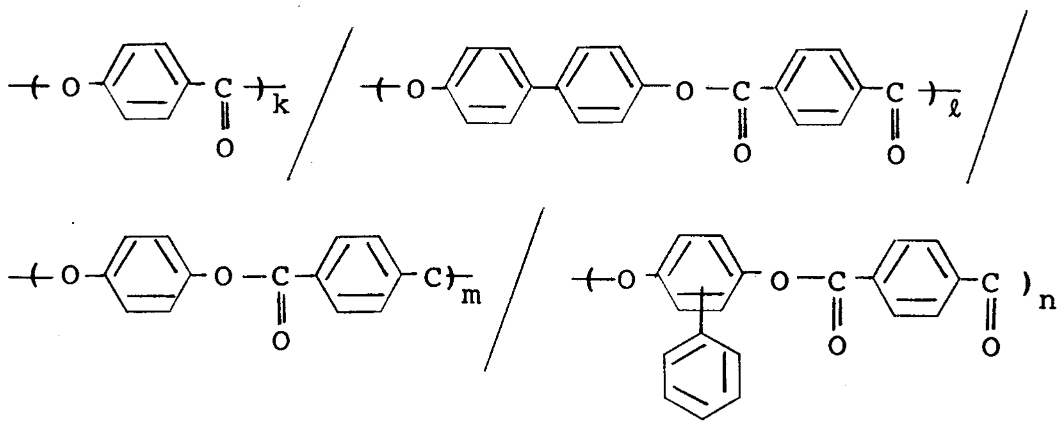

k / ℓ / m / n = 72 / 17 / 2.5 / 8.5

The liquid crystal starting temperature of this polymer was 301 °C. Test pieces were prepared by using the molding machine shown in example 1 under such conditions that the cylinder temperature and the mold temperature were 350° and 30 °C respectively. The bending modulus measured by the same conditions as those of example 1 was 11.7 GPa and the value of Izod impact strength (mold-notch) was 17 kg•cm/cm, which is high. The heat distortion temperature measured was 208 °C (18.56 kg/$cm^2$), thus showing excellent heat resistance. The melt viscosity of this polymer was 650 poises at 350 °C under the shear rate of 1,000 $sec^{-1}$, thus showing good flow characteristics. The logarithmic viscosity of this polymer was 2.9 dℓ/g.

Example 10

54.05 g (30 x $10^{-2}$ mole) of p-acetoxybenzoic acid (i), 10.81 g (4 x $10^{-2}$ mole) of 4,4'-diacetoxybiphenyl (vi), 3.88 g (2 x $10^{-2}$ mole) of hydroquinone diacetate (vii), 9.77 g (4 x $10^{-2}$ mole) of 2,6-diacetoxynaphthalene($viii_3$),and 16.61 g (10 x $10^{-2}$ mole) of terephthalic acid ($v_1$) were introduced into a polymerization test tube in such proportions that the molar ratio of (i)/[(i) + (vi) + (vii) + $viii_3$)] was 75 mole %, that of (vi)/[(vi) + (vii)] was 67 mole %, and that of (vii)/[(vii) + ($viii_3$)] was 33 mole %, and deacetylation polymerization was carried out under the following conditions.

At first, the reaction was carried out under nitrogen atmosphere at 250° to 340 °C for 3 hours and the pressure was thereafter reduced to 1.5 mmHg. Polycondensation reaction was furthermore carried out by heating for 1.0 hour more to obtain a brown polymer. Five batches of the polymerization were furthermore carried cut under the same conditions and the polymers recovered were ground using a grinding machine manufactured by Horai Co., Ltd.

The theoretical formula of this polymer was as follows.

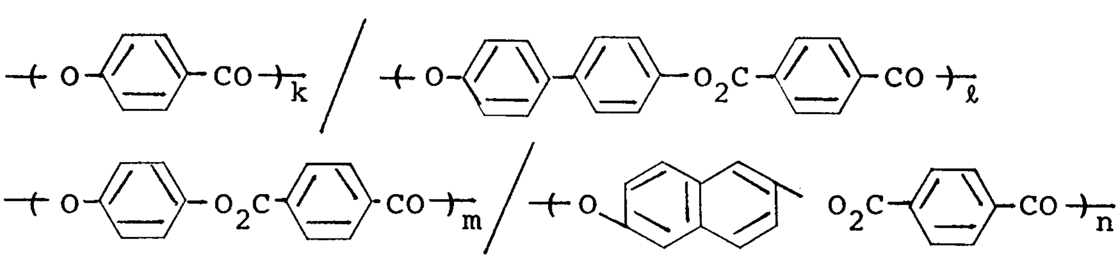

k / ℓ / m / n = 75 / 10 / 5 / 10

The result of the elemental analysis of this polyester is shown in Table 5, which shows good coincidance with the theoretical values.

Table 5

| | Measured values (weight %) | Theoretical values (weight %) |
|---|---|---|
| C | 71.9 | 72.0 |
| H | 3.5 | 3.5 |
| O | 24.6 | 24.5 |

Notice: The oxygen content (%) was calculated by the equation O(%) = 100(%) - C(%) - H(%).

This polyester showed good optical anisotropy above 268 °C.

The logarithmic viscosity of this polyester measured in pentafluorophenol (the polymer concentration was 0.1 g/dℓ) at 60 °C was 3.1 dℓ/g.

Test pieces of this polymer were prepared by using the molding machine of example 1 under such conditions that the cylinder temperature and the mold temperature were 320 ° and 120 °C respectively. The bending modulus measured by same conditions as those of example 1 was 13 GPa and the value of Izod impact strength (mold-notch) was 15 kg•cm/cm, which is high. The heat distortion temperature measured was 241 °C (18.56 kg/cm$^2$), thus showing excellent heat resistance.

The melt viscosity of this polymer measured by using Kota type flow tester manufactured by Shimazu Corporation at 320 °C under the shear rate of 1,000 sec$^{-1}$ was 1,800 poises, thus showing good flow characteristics. By using the spun filament obtained by this measurement, the dynamic loss peak temperature was measured by means of Rheovibron DDV-II-EA manufactured by Toyo Boldwin Co., Ltd. under such conditions that the frequency, the rate of temperature rise and the distance between chucks were 110 Hz, 2 °C/minute and 40 mm respectively and the glass transition temperature was found to be 234 °C, which showed that the polymer had high heat resistance.

Examples 11 to 17 and comparison examples 8 to 13

p-Hydroxybenzoic acid (i), 4,4'-dihydroxybiphenyl (vi), hydroquinone (vii), t-butylhydroquinone ($viii_1$), phenylhydroquinone ($viii_2$), chlorohydroquinone ($viii_4$), methylhydroquinone ($viii_5$) and terephthalic acid ($v_1$) were introduced into molar compositions of [(vi) + (vii) + ($viii_1$) + ($viii_2$) + ($viii_4$) + ($viii_5$)] = ($v_1$) as shown in Table 6 and acetic anhydride of 1.2 times of ($v_1$) were also introduced into the mixture. The reaction was carried out under nitrogen atmosphere at 130 °C to 250 °C for 5 hours and furthermore at 250 ° to 340 °C for 2 hours. After elevating the temperature at 350 °C, the pressure was reduced to 0.2 to 0.8 mmHg and the reaction was furthermore carried out for 0.5 to 1 hour more to obtain a brown polymer. Liquid crystal starting temperature, melt viscosity (measured at liquid crystal initiation temperature +40 °C under the rate of shear of 1,000 sec$^{-1}$) and logarithmic viscosity were measured.

Test pieces of this polymer were prepared by using the molding machine of example 1 under such conditions that the cylinder temperature was liquid crystal initiation temperature +40 °C and the molding temperature was 30 °C and the bending modulus and heat distortion temperature were measured under the same conditions as those of example 1. These results are shown in Table 6.

Table 6

| | | Composition of raw materials (x10$^{-2}$ mole) | | | | | | | | (i)/[(i)+(vi)+(vii)] (mole %) | (vi)/[(vi)+(vii)] (mole %) | (vii)/[(vii)+(viii$_1$)+(viii$_2$)+(viii$_4$)+(viii$_5$)] (mole %) | Liquid crystal initiation temperature (°C) | Melt viscosity (poise) | Logarithmic viscosity (dℓ/g) | Flexural modulus (GPa) | Heat distortion temperature (°C) |
|---|---|---|---|---|---|---|---|---|---|---|---|---|---|---|---|---|---|
| | | (i) | (vi) | (vii) | (viii$_1$) | (viii$_2$) | (viii$_4$) | (viii$_5$) | (v$_1$) | | | | | | | | |
| Example | 11 | 28.8 | 5.5 | 2.0 | 3.7 | - | - | - | 11.2 | 72 | 73 | 35 | 298 | 2,000 | 3.8 | 15.2 | 235 |
| | 12 | 28.8 | 6.1 | 2.0 | 3.1 | - | - | - | 11.2 | 72 | 75 | 39 | 306 | 5,700 | 4.5 | 15.4 | 244 |
| | 13 | 28.8 | 6.1 | 3.1 | 2.0 | - | - | - | 11.2 | 72 | 66 | 61 | 310 | 5,900 | 4.4 | 14.1 | 270 |
| | 14 | 28.8 | 6.8 | 3.4 | 1.0 | - | - | - | 11.2 | 72 | 67 | 77 | 317 | 4,500 | 4.3 | 14.0 | 282 |
| | 15 | 28.8 | 7.2 | 2.0 | - | 2.0 | - | - | 11.2 | 72 | 78 | 50 | 305 | 630 | 3.0 | 14.1 | 262 |
| | 16 | 28.8 | 7.2 | 2.0 | - | - | 2.0 | - | 11.2 | 72 | 78 | 50 | 301 | 760 | 3.1 | 15.4 | 247 |
| | 17 | 28.8 | 7.2 | 2.0 | - | - | - | 2.0 | 11.2 | 72 | 78 | 50 | 300 | 750 | 2.9 | 15.3 | 243 |
| Comparison example | 8 | 26.8 | 8.8 | - | 4.4 | - | - | - | 13.2 | 67 | 100 | 0 | 302 | 8,200 | 4.3 | 13.4 | 215 |
| | 9 | 26.8 | 4.4 | - | 8.8 | - | - | - | 13.2 | 67 | 100 | 0 | 266 | 750 | 3.1 | 11.4 | 165 |
| | 10 | 26.8 | - | 4.4 | 8.8 | - | - | - | 13.2 | 67 | 0 | 33 | Solidification occurred during polymerization | | | | |
| | 11 | 26.8 | - | 8.8 | 4.4 | - | - | - | 13.2 | 67 | 0 | 67 | | | | | |
| | 12 | 16.0 | 8.0 | - | - | 16.0 | - | - | 24.0 | 40 | 100 | 0 | 294 | 2,700 | 3.8 | 9.4 | 151 |
| | 13 | 26.8 | 4.4 | - | - | 8.8 | - | - | 13.2 | 67 | 100 | 0 | 312 | 3,700 | 3.9 | 9.2 | 168 |

It can be seen from Table 6 that polyesters of the present invention have good flow characteristics and excellent mechanical properties and heat resistance. On the contrary, it can be also seen from Table 6 that polyesters of comparison examples had inferior flow characteristics and heat resistance to those of polyesters of the present invention (Comparison example 8), had poor heat resistance (Comparison examples 9, 12 and 13), or were solidified during polymerization and homogeneous melt polymerization was impossible (Comparison examples 10 and 11).

Aromatic polyesters of the invention have melting points below 400 ° C in many cases and can be melt-moldable by means of ordinary melt moldings such as extrusion molding, injection molding, compression molding, blow molding and the like to prepare fibers, films, three dimensional moldings, containers and hoses. They can be used for electronic parts such as connectors and the like, optical fiber parts such as tension members and the like, chemical apparatus such as packings for packed columns and the like, automotive parts, containers for electronic ranges, IC sealing materials, plastic magnets and so on.

## Claims

1. An aromatic polyester consisting of the below described structural units (i), (vi), (vii) and (v) with or without the structural unit (viii), where the molar ratio of the structural unit (i) to the total of the structural units [(i) + (vi) + (vii) + (viii)] is from 60 to 90%, the molar ratio of the structural units [(vi) + (vii) + (viii)] to the total of the structural units [(i) + (vi) + (vii) + (viii)] is from 10 to 40%, the molar ratio of the structural unit (vi) to the total of the structural units [(vi) + (vii)] is 50 to 95%, the molar ratio of the structural unit (vii) to the total of the structural units [(vii) + (viii)] is 5 to 100 % and the molar ratio of the total of the structural units [(vi) + (vii) + (viii)] to the structural unit (v) is 1; and whose logarithmic viscosity in 0.1g/dl pentafluorophenol solution at 60 ° C is 1.0 to 20 dl/g

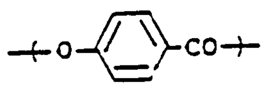 ..... (i)

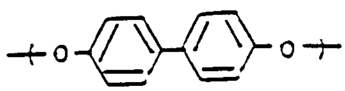 ..... (vi)

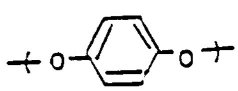 ..... (vii)

{OXO} (viii)

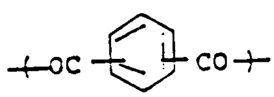 ..... (v)

wherein X is selected from

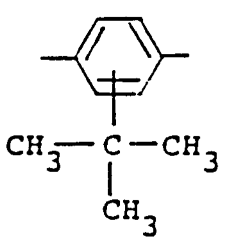 , 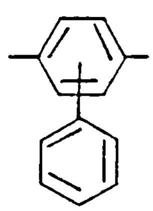 , 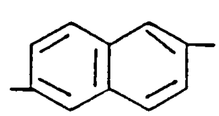 , 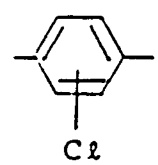 and 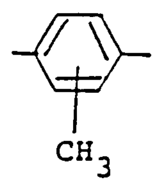

and the carbonyl groups in the structural unit (v) are each in a position meta or para to one another, more than 65 mole % thereof being in the para position.

2. An aromatic polyester according to claim 1, comprising the structural units (i), (v), (vi) and (vii), wherein 65 to 85 mole % of the carbonyl groups of the structural units (v) are each in a position para to one another.

3. An aromatic polyester according to claim 1 or claim 2, comprising the structural units (i), (v), (vi) and (vii), wherein the molar ratio of the structural unit (vi) to the total of the structural units [(vi) + (vii)] is 60

to 80 % and 72 to 77.5 mole % of the carbonyl groups of the structural units (v) are in a position para to one another.

**4.** An aromatic polyester according to claim 1, comprising the structural units (i), (v), (vi), (vii) and (viii), wherein the molar ratio of the structural unit (viii) to the total of the structural units [(vii) + (viii)] is 10 to 80 % and X in structural unit (viii) is selected from

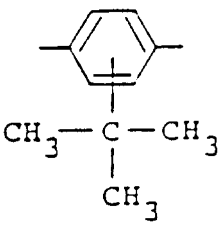
,
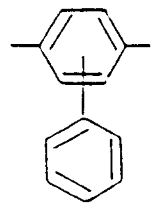
and
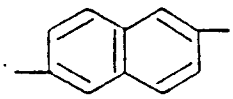

**5.** An aromatic polyester according to claim 4, in which the molar ratio of the structural unit (i) to the total of the structural units [(i) + (iv) + (vii) + (viii)] is 65 to 80 % and 100 mole % of the carbonyl groups of the structural units (v) are each in a position para to one another.

**6.** A moulding prepared either by extrusion or injection molding of an aromatic polyester according to any of claims 1 to 5.

**7.** A molding according to claim 6, wherein the aromatic polyester comprises the structural units (i), (v), (vi), (vii) and (viii), the molar ratio of the structural unit (vi) to the total of the structural units [(vi) + (vii)] being 60 to 80 % and 72 to 77.5 mole % of the carbonyl groups of the structural units (v) each being in a position para to one another.

**8.** A moulding according to claim 6, wherein the aromatic polyester comprises the structural units (i), (v), (vi), (vii) and (viii), the molar ratio of the structural unit (i) to the total of the structural units [(i) + (vi) + (vii) + (viii)] being 65 to 80 %, the molar ratio of the total of the structurla units [(vi) + (vii) + (viii)] to the total of the structural units [(i) + (vi) + (vii) + (viii)] being 35 to 20 %, the molar ratio of the structural unit (viii) to the total of the structural units [(vii) + (viii)] being 10 to 80 mole % and, in structural unit (viii), X is selected from

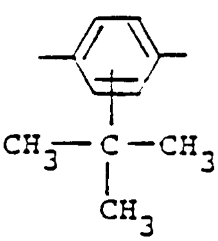
,
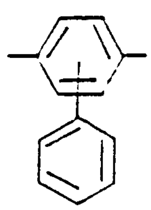
,
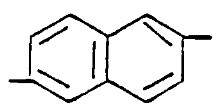

and 100 mole % of the carbonyl groups of the structural unit (v) are in a position para to one another.

**9.** A process for producing an aromatic polyester according to claim 1 and comprising the following repeating units

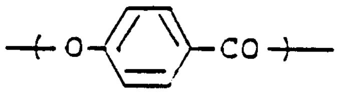 ..... (i)

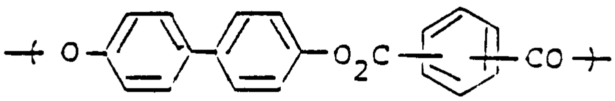 ..... (ii)

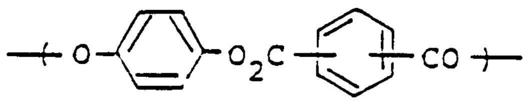 ..... (iii)

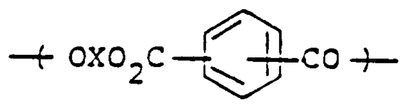 ..... (iv)

(wherein X is selected from

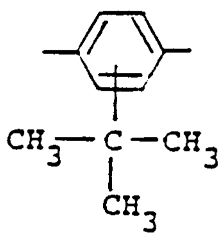 , 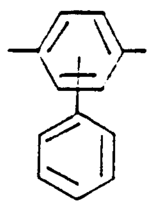 , 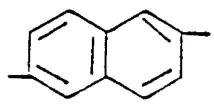 , 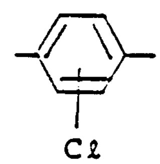 and 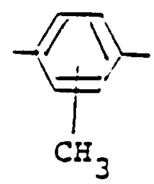 ),

which process comprises reaction of the following compounds

(a) p-hydroxybenzoic acid
(b) 4,4'-dihydroxybiphenyl
(c) hydroquinone
(d) terephthalic acid or a mixture of terephthalic acid and isophthalic acid containing more than 65% of terephthalic acid

with or without

(e) a dioxy compound selected from t-butylhydroquinone, phenylhydroquinone, 2,6-dihydroxynaphthalene, chlorohydroquinone and methylhydroquinone,

the molar proportions of the compounds (a) to (e) relative to one another being such that, on the theoretical assumption that all of the available terephthalic acid compound (d), together with any isophthalic compound (d) if present, will react with each of compounds (b), (c) and, if present, (e), the repeating units will be provided in the following % molar proportions

$$(i)/[(i)+(ii)+(iii)+(iv)] \times 100 \text{ mole\%} = 60 \text{ to } 90; \quad (1)$$
$$[(ii)+(iii)+(iv)]/[(i)+(ii)+(iii)+(iv)] \times 100 \text{ mole\%} = 40 \text{ to } 10; \quad (2)$$
$$(ii)/[(ii)+(iii)] \times 100 \text{ mole \%} = 50 \text{ to } 95; \text{ and} \quad (3)$$
$$(iii)/[(iii)+(iv)] \times 100 \text{ mole \%} = 5 \text{ to } 100. \quad (4)$$

**10.** A process according to claim 9, in which the aromatic polyester comprises the structural units (i) to (iii), wherein 65 to 85 mole % of the carbonyl groups of the structural units (ii) and (iii) are each in a position para to one another.

**11.** A process according to claim 9 or claim 10, in which the aromatic polyester comprises the structural units (i) to (iii), wherein the molar ratio of the structural unit (ii) to the total of the structural units [(ii) + (iii)] is 60 to 80% and 72 to 77.5 mole % of the carbonyl groups of the structural units (ii) and (iii) are each in a position para to one another.

12. A process according to claim 9, in which the aromatic polyester comprises the structural units (i) to (iii), wherein the molar ratio of the structural unit (iv) to the total of the structural units [(iii) + (iv)] is 10 to 80% and X in structural unit (iv) is selected from

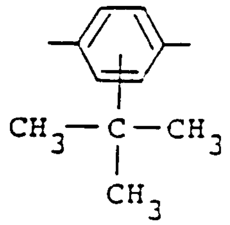 , 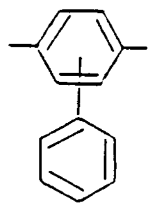 and 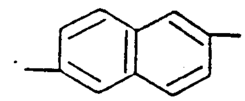

13. A process according to claim 12, wherein, in the aromatic polyester, the molar ratio of the structural unit (i) to the total of the structural units [(i) + (ii) + (iii) + (iv)] is 65 to 80 % and 100 mole % of the carbonyl groups of the structural units (ii) to (iv) are each in a position para to one another.

## Patentansprüche

1. Aromatischer Polyester, bestehend aus den nachstehend beschriebenen Struktureinheiten (i), (vi), (vii) und (v), mit oder ohne Struktureinheit (viii), worin das Molverhältnis von Struktureinheit (i) zur Gesamtmenge der Struktureinheiten [(i) + (vi) + (vii) + (viii)] 60 bis 90%, das Molverhältnis der Struktureinheiten [(vi) + (vii) + (viii)] zur Gesamtmenge der Struktureinheiten [(i) + (vi) + (vii) + (viii)] 10 bis 40%, das Molverhältnis der Struktureinheit (vi) zur Gesamtmenge der Struktureinheiten [(vi) + (vii)] 50 bis 95%, das Molverhältnis der Struktureinheit (vii) zur Gesamtmenge der Struktureinheiten [-(vii) + (viii)] 5 bis 100% und das Molverhältnis der Gesamtmenge der Struktureinheiten [(vi) + (vii) + (viii)] zur Struktureinheit (v) 1 beträgt; und dessen logarithmische Viskosität einer Lösung in Pentafluorphenol mit 0,1 g/dl bei 60 °C 1,0 - 20 dl/g beträgt

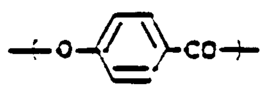 ..... (i)

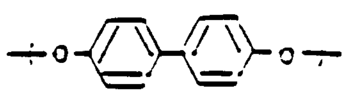 ..... (vi)

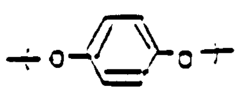 ..... (vii)

{OXO} (viii)

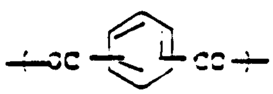 ..... (v)

worin X ausgewählt ist aus

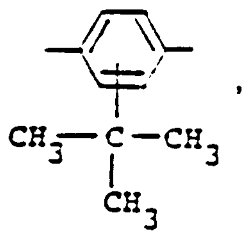 , 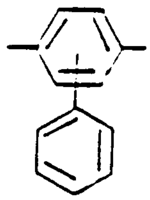 , 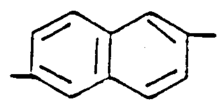 , 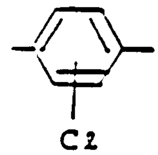 und 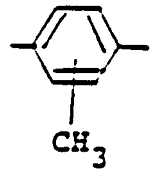

und die Carbonylgruppen in der Struktureinheit (v) jeweils in m- oder p-Position zueinander stehen, wobei mehr als 65 Mol-% in p-Position stehen.

**2.** Aromatischer Polyester nach Anspruch 1, umfassend die Struktureinheiten (i), (v), (vi) und (vii), worin 65 - 85 Mol-% der Carbonylgruppen der Struktureinheit (v) jeweils in p-Position zueinander stehen.

**3.** Aromatischer Polyester nach Anspruch 1 oder 2, umfassend die Struktureinheiten (i), (v), (vi) und (vii), worin das Molverhältnis der Struktureinheit (vi) zur Gesamtmenge der Struktureinheiten [(vi) + (vii)] 60 bis 80% beträgt und 72 - 77,5 Mol-% der Carbonylgruppen der Struktureinheit (v) jeweils in p-Position zueinander stehen.

**4.** Aromatischer Polyester nach Anspruch 1, umfassend die Struktureinheiten (i), (v), (vi), (vii) und (viii), worin das Molverhältnis der Struktureinheit (viii) zur Gesamtmenge der Struktureinheiten [(vii) + (viii)] 10 bis 80% beträgt und X in Struktureinheit (viii) ausgewählt ist aus

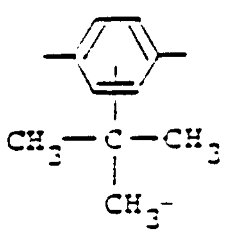 , 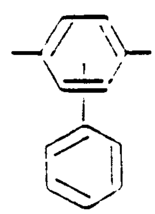 und 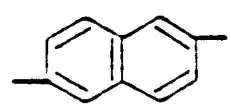

**5.** Aromatischer Polyester nach Anspruch 4, worin das Molverhältnis der Struktureinheit (i) zur Gesamtmenge der Struktureinheiten [(i) + (vi) + (vii) + (viii)] 65 bis 80% beträgt und 100 Mol-% der Carbonylgruppen der Struktureinheit (v) jeweils in p-Position zueinander stehen.

**6.** Formteil, hergestellt entweder durch Extrusion oder Spritzguß eines aromatischen Polyesters nach irgendeinem der Ansprüche 1 - 5.

**7.** Formteil nach Anspruch 6, worin der aromatische Polyester die Struktureinheiten (i), (v), (vi), (vii) und (viii) umfaßt, das Molverhältnis der Struktureinheit (vi) zur Gesamtmenge der Struktureinheiten [(vi) + (vii)] 60 bis 80% beträgt und 72 - 77,5 Mol-% der Carbonylgruppen der Struktureinheit (v) jeweils in p-Position zueinander stehen.

**8.** Formteil nach Anspruch 6, worin der aromatische Polyester die Struktureinheiten (i), (v), (vi), (vii) und (viii) umfaßt, das Molverhältnis der Struktureinheit (i) zur Gesamtmenge der Struktureinheiten [(i) + (vi) + (vii) + (viii)] 65 bis 80%, das Molverhältnis der Gesamtmenge der Struktureinheiten [(vi) + (vii) + (viii)] zur Gesamtmenge der Struktureinheiten [(i) + (vi) + (vii) + (viii)] 35 bis 20%, das Molverhältnis der Struktureinheit (viii) zur Gesamtmenge der Struktureinheiten [(vii) + (viii)] 10 bis 80% beträgt, in Struktureinheit X ausgewählt ist aus

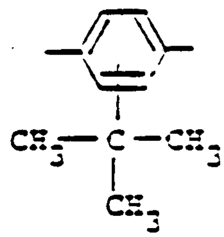, 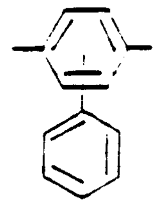, 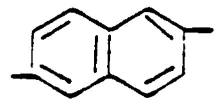

und 100 Mol-% der Carbonylgruppen der Struktureinheit (v) jeweils in p-Position zueinander stehen.

**9.** Verfahren zur Herstellung eines aromatischen Polyesters nach Anspruch 1, umfassend die folgenden wiederkehrenden Einheiten

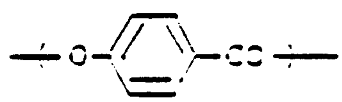 ..... (i)

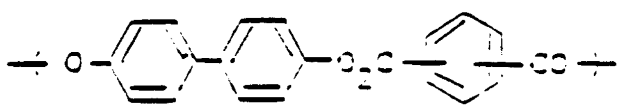 ..... (ii)

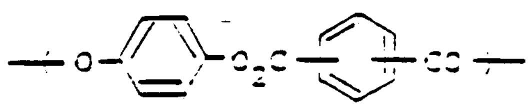 ..... (iii)

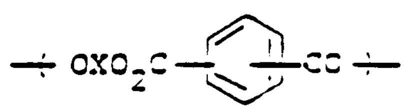 ..... (iv)

(worin X ausgewählt ist aus

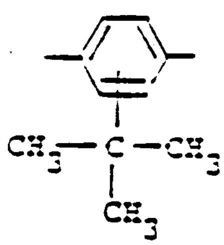, 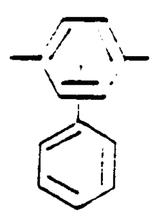, 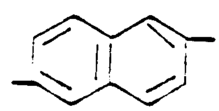, 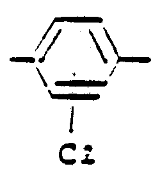 und 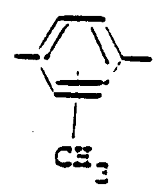),

worin das Verfahren die Reaktion der folgenden Verbindungen umfaßt:

(a) p-Hydroxybenzoesäure
(b) 4,4'-Dihydroxybiphenyl
(c) Hydrochinon
(d) Terephthalsäure oder ein Gemisch aus Terephthalsäure und Isophthalsäure, das mehr als 65% Terephthalsäure enthält,

mit oder ohne

(e) einer Dioxyverbindung, ausgewählt aus t-Butylhydrochinon, Phenylhydrochinon, 2,6-Dihydroxynaphthalin, Chlorhydrochinon und Methylhydrochinon,

wobei die Molanteile der Verbindungen (a) bis (e) zueinander, unter der theoretischen Annahme, daß die gesamte verfügbare Terephthalsäure-Verbindung (d), gegebenenfalls zusammen mit einer Isophthalsäure-Verbindung (d), mit jeder der Verbindungen (b), (c) und gegebenenfalls (e) reagiert, so gewählt werden, daß die wiederkehrenden Einheiten in den folgenden prozentuellen Molanteilen vorliegen:

(i) / [(i) + (ii) + (iii) + (iv)] x 100 Mol-% = 60 - 90; (1)
[(ii) + (iii) + (iv)] / [(i) + (ii) + (iii) + (iv)] x 100 Mol-% = 40 - 10; (2)
(ii) / [(ii) + (iii)] x 100 Mol-% = 50 - 95; und (3)
(iii) / [(iii) + (iv)] x 100 Mol-% = 5 - 100. (4)

**10.** Verfahren nach Anspruch 9, worin der aromatische Polyester die Struktureinheiten (i) bis (iii) umfaßt, worin 65 - 85 Mol-% der Carbonylgruppen der Struktureinheiten (ii) und (iii) jeweils in p-Position zueinander stehen.

**11.** Verfahren nach Anspruch 9 oder 10, worin der aromatische Polyester die Struktureinheiten (i) bis (iii) umfaßt, das Molverhältnis der Struktureinheit (ii) zur Gesamtmenge der Struktureinheiten [(ii) + (iii)] 60 bis 80% beträgt und 72 - 77,5 Mol-% der Carbonylgruppen der Struktureinheiten (ii) und (iii) jeweils in p-Position zueinander stehen.

**12.** Verfahren nach Anspruch 9, worin der aromatische Polyester die Struktureinheiten (i) bis (iii) umfaßt, das Molverhältnis der Struktureinheit (iv) zur Gesamtmenge der Struktureinheiten [(iii) + (iv)] 10 bis 80% beträgt und X in der Struktureinheit (iv) ausgewählt wird aus

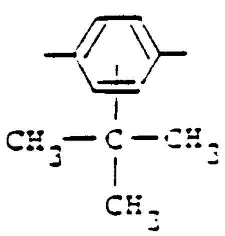 , 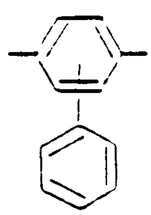 und 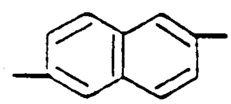

**13.** Verfahren nach Anspruch 12, worin im aromatischen Polyester das Molverhältnis der Struktureinheit (i) zur Gesamtmenge der Struktureinheiten [(i) + (ii) + (iii) + (iv)] 65 bis 80% beträgt und 100 Mol-% der Carbonylgruppen der Struktureinheiten (ii) bis (iv) jeweils in p-Position zueinander stehen.

## Revendications

**1.** Polyester aromatique consistant des unités (i), (vi), (vii) et (v) structurelles décrites ci-après, avec ou sans l'unité structurelle (viii), où le rapport molaire de l'unité structurelle (i) au total des unités structurelles [(i) + (vi) + (vii) + (viii)] est de 60 à 90%, le rapport molaire des unités structurelles [(vi) + (viii)] au total des unités structurelles [(i) + (vi) + (vii) + (viii)] est de 10 à 40%, le rapport molaire de l'unité structurelle (vi) au total des unités structurelles [(vi) + (vii)] est de 50 à 95%, le rapport molaire de l'unité structurelle (vii) au total des unités structurelles [(vii) + (viii)] est de 5 à 100% et le rapport molaire du total des unités structurelles [(vi) + (vii) + (viii)] à l'unité structurelle (v) est de 1 ; et dont la viscosité logarithmique dans une solution de pentafluorophénol à 0,1 g/dl à 60 ° C est de 1,0 à 20 dl/g

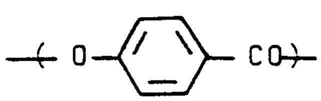 ..... (i)

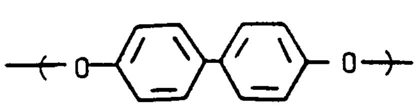 ..... (vi)

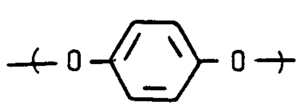 ..... (vii)

{OXO} (viii)

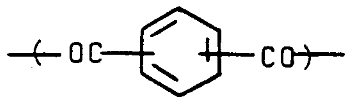 ..... (v)

où X est choisi parmi

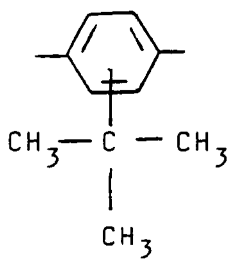 , 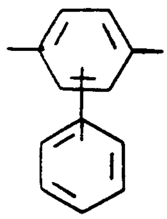 , 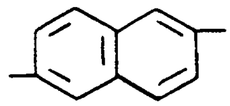 , 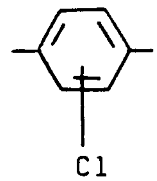 et 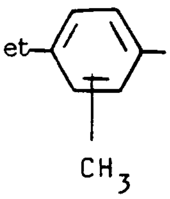 ,

et les groupes carbonyles dans l'unité structurelle (v) sont chacun en position méta ou para par rapport l'un à l'autre, plus de 65% en moles de ceux-ci étant en position para.

2. Polyester aromatique selon la revendication 1, comprenant les unités structurelles (i), (v), (vi) et (vii), où 65 à 85% en moles des groupes carbonyles des unités structurelles (v) sont chacune en position para l'une par rapport à l'autre.

3. Polyester aromatique selon la revendication 1 ou 2, comprenant les unités structurelles (i), (v), (vi) et (vii), où le rapport molaire de l'unité structurelle (vi) au total des unités structurelles [(vi) + (vii)] est de 60 à 80% et 72 à 77,5% en moles des groupes carbonyles des unités structurelles (v) sont en position para l'un par rapport à l'autre.

4. Polyester aromatique selon la revendication 1, comprenant les unités structurelles (i), (v), (vi), (vii) et (viii), où le rapport molaire de l'unité structurelle (viii) au total des unités structurelles [(vii) + (viii)] est de 10 à 80% et X dans l'unité structurelle (viii) est choisi parmi

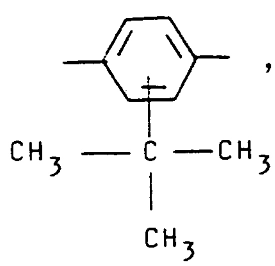 , 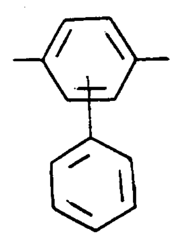 et 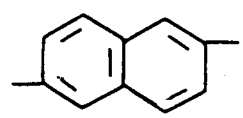

5. Polyester aromatique selon la revendication 4, dans lequel le rapport molaire de l'unité structurelle (i) au total des unités structurelles [(i) + (iv) + (vii) + (viii)] est de 65 à 80% et 100% en moles des groupes carbonyles des unités structurelles (v) sont chacune en position para l'une par rapport à l'autre.

6. Moulage préparé par moulage soit par extrusion soit par injection d'un polyester aromatique selon l'une des revendications 1 à 5.

7. Moulage selon la revendication 6, où le polyester aromatique comprend les unités structurelles (i), (v), (vi), (vii) et (viii), le rapport molaire de l'unité structurelle (vi) autotal des unités structurelles [(vi) + (vii)] étant de 60 à 80% et de 72 à 77,5% en moles des groupes carbonyles des unités structurelles (v) étant chacun dans une position para l'un par rapport à l'autre.

**8.** Moulage selon la revendication 6, où le polyester aromatique comprend les unités structurelles (i), (v), (vi), (vii) et (viii), le rapport molaire de l'unité structurelle (i) au total des unités structurelles [(i) + (vi) + (vii) = (viii)] étant de 65 à 80%, le rapport molaire du total des unités structurelles [(vi) + (vii) + (viii)] au total des unités structurelles [(i) + (vi) + (vii) + (viii)] étant de 35 à 20%, le rapport molaire de l'unité structurelle (viii) au total des unités structurelles [(vii) + (viii)] étant de 10 à 80% en moles et, dans l'unité structurelle (viii), X est choisi parmi

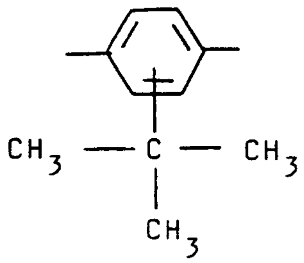

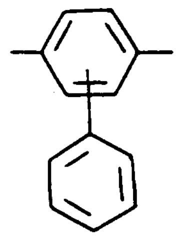

,

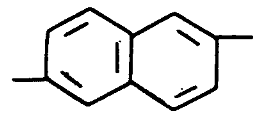

et 100% en moles des groupes carbonyles de l'unité structurelle (v) sont en position para l'un par rapport à l'autre.

**9.** Procédé pour produire un polyester aromatique selon la revendication 1 et comprenant les unités répétantes suivantes

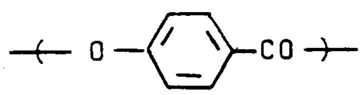 ..... (i)

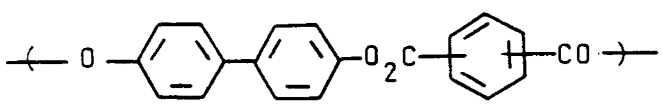 ..... (ii)

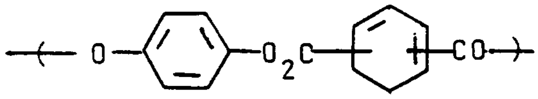 ..... (iii)

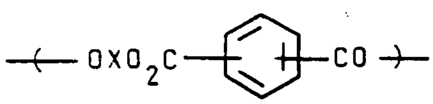 ..... (iv)

(où X est choisi parmi

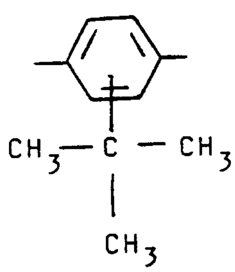

,

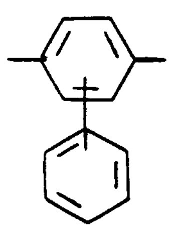

,

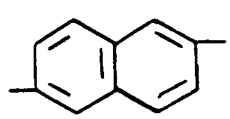

,

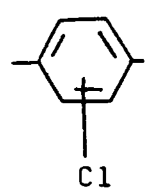

et

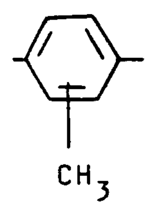

)

,

lequel procédé comprend la réaction des composés suivants
(a) acide p-hydroxybenzoïque
(b) 4,4'-dihydroxybiphényle
(c) hydroquinone

(d) acide téréphtalique ou un mélange d'acide téréphtalique et d'acide isophtalique contenant plus de 65% d'acide téréphtalique

avec ou sans

(e) un composé dioxy choisi parmi la t-butylhydroquinone, la phénylhydroquinone, le 2,6-dihydroxynaphtalène, la chlorohydroquinone et la méthylhydroquinone,

les proportions molaires des composés (a) à (e) par rapport l'un à l'autre étant telles que, sur supposition théorique que tout le composé acide téréphtalique (d) disponible, avec tout composé isophtalique (d) si présent, réagira avec chacun des composés (b), (c) et, si présent, (e), les unités répétantes étant fournies dans les propartions en % molaires suivantes

(i)/[(i) + (ii) + (iii) + (iv)] x 100% mole = 60 à 90 ; (1)

[(ii) + (iii) + (iv)]/[(i) + (ii) + (iii) + (iv)] x 100% mole = 40 à 10 ; (2)

(ii)/[(ii) + (iii)] x 100% mole = 50 à 95 ; et (3)

(iii)/[(iii) + (iv)] x 100% mole = 5 à 100. (4)

**10.** Procédé selon la revendication 9, dans lequel le polyester aromatique comprend les unités structurelles (i) à (iii), où 65 à 85% en moles des groupes carbonyles des unités structurelles (ii) et (iii) sont chacun dans une position para l'un par rapport à l'autre.

**11.** Procédé selon la revendication 9 ou 10, dans lequel le polyester aromatique comprend les unités structurelles (i) à (iii), où le rapport malaire de l'unité structurelle (ii) au total des unités structurelles [-(ii) + (iii)] est de 60 à 80% et de 72 à 77,5% en moles des groupes carbonyles des unités structurelles (ii) et (iii) sont chacun en position para l'un par rapport à l'autre.

**12.** Procédé selon la revendication 9, dans lequel le polyester aromatique comprend les unités structurelles (i) à (iii), où le rapport molaire de l'unité structurelle (iv) au total des unités structurelles [(iii) + (iv)] est de 10 à 80% et X dans l'unité structurelle (iv) est choisi parmi

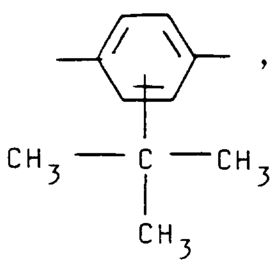
,
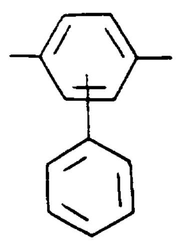
et
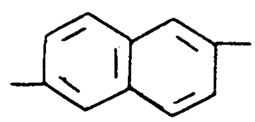

**13.** Procédé selon la revendication 12, où, dans le polyester aromatique, le rapport molaire de l'unité structurelle (i) au total des unités structurelles [(i) + (ii) + (iii) + (iv)] est de 65 à 80% et 100% en moles des groupes carbonyles des unités structurelles (ii) à (iv) sont chacun dans une position para l'un par rapport à l'autre.